# EUROPÄISCHE PATENTSCHRIFT

(11) **EP 2 834 539 B1**
(45) Veröffentlichungstag und Bekanntmachung des Hinweises auf die Patenterteilung: **04.05.2016**
(21) Anmeldenummer: 13709805.9
(22) Anmeldetag: 01.03.2013
(51) Int. Cl.: F16H 57/04, B61C 9/48

(54) **GETRIEBEANORDNUNG EINES SCHIENENFAHRZEUGES**
GEARBOX ARRANGEMENT FOR A RAIL VEHICLE
SYSTÈME DE TRANSMISSION D'UN VÉHICULE FERROVIAIRE

(30) Priorität: 02.04.2012 DE 102012205368
(43) Veröffentlichungstag der Anmeldung: 11.02.2015
(73) Patentinhaber: ZF Friedrichshafen AG, 88046 Friedrichshafen (DE)
(72) Erfinder: SOMSCHOR, Bernd, 88069 Tettnang (DE); PANOWITZ, Dieter, 88138 Sigmarszell (DE)
(74) Vertreter: Scholz, Nikolaus
(86) Internationale Anmeldenummer: PCT/EP2013/054122
(87) Internationale Veröffentlichungsnummer: WO 2013/149773

(56) Entgegenhaltungen:
- EP-A1- 0 021 223
- DD-A1- 143 174
- DE-A1- 19 757 855
- DE-A1-102006 003 928
- DE-B- 1 013 130
- DE-U1- 7 917 319

## Beschreibung

Die vorliegende Erfindung betrifft eine Getriebeanordnung eines Schienenfahrzeuges gemäß der im Oberbegriff des Patentanspruches 1 näher definierten Art.

Aus der Fahrzeugtechnik ist es bekannt, dass bei Getriebeanordnungen mit schrägverzahnten Stirnradpaaren während des Betriebes Axialkräfte auf die Stirnräder und die Wellen bewirkt werden. Zum Auffangen dieser Axialkräfte werden üblicherweise Schrägwälzlager, wie zum Beispiel Kegelrollenlager oder Axiallager eingesetzt, die die Axialkräfte gegenüber dem Getriebegehäuse abstützen. Hierbei ist es nachteilig, dass die verwendeten Kegelrollenlager und Axiallager aufwändige Einstellt- und Nachstellarbeiten zum Beispiel bei der Montage des Getriebes oder bei späteren Wartungsarbeiten erfordern. Fehlerhaft eingestellte Kegelrollenlager und Axiallager verursachen Getriebeschäden, so dass der Einsatz von wartungsarmen Zylinderrollenlager, die keine Axialkräfte aufnehmen, bevorzugt ist. Jedoch ist es dann erforderlich, die auftretenden Axialkräfte anderweitig abzufangen.

Beispielsweise aus der Druckschrift DE 79 17 319 U1 ist ein Druckkammgetriebe bekannt, bei dem ein schrägverzahntes Stirnradpaar vorgesehen ist, wobei einem der vorgesehenen Stirnräder ein Druckkamm zur Aufnahme von auftretenden Axialkräften angeschmiedet ist. Der Druckkamm wirkt über einen gemeinsamen Kontaktbereich mit einem an dem anderen Stirnrad angeordneten Axialdruckelement zusammen.

Bei der Verwendung von Druckkämmen zur Aufnahme von Axialkräften bei schrägverzahnten Stirnradpaaren, die über Zylinderrollenlager in dem Getriebegehäuse gelagert sind, ergeben sich jedoch insbesondere bei Getriebeanordnungen von Schienenfahrzeugen im Nahverkehrsbereich aufgrund des häufigen Start-Stop-Betriebs mit Stillstandszeiten Probleme bezüglich einer ausreichenden Schmiermittelversorgung des Druckkamm-Kontaktbereiches.

Demzufolge liegt der vorliegenden Erfindung die Aufgabe zu Grunde, eine Getriebeanordnung eines Schienenfahrzeuges der eingangs beschriebenen Gattung vorzuschlagen, bei dem das Abfangen von auftretenden Axialkräften und eine ausreichende Schmiermittelversorgung sichergestellt sind.

Diese Aufgabe wird erfindungsgemäß durch die Merkmale des Patentanspruches 1 gelöst, wobei sich vorteilhafte Ausgestaltungen aus den Unteransprüchen, der Beschreibung und den Zeichnungen ergeben.

Es wird eine Getriebeanordnung eines Schienenfahrzeuges mit zumindest einem schrägverzahnten Stirnradpaar beansprucht, welches beispielsweise ein mit einem Antriebsritzel kämmendes Abtriebsrad umfasst, wobei die Stirnräder zum Beispiel über Zylinderrollenlager in einem Getriebegehäuse gelagert sind. Zum Aufnehmen bzw. Abfangen von an der Schrägverzahnung entstehenden Axialkräften des Stirnradpaares ist zumindest ein Druckkamm zum Bilden eines erforderlichen Kontaktbereiches an dem Antriebsritzel und/oder an dem Abtriebsrad befestigt. Jeder Druckkamm kann im Wesentlichen als Druckscheibe oder dergleichen ausgeführt sein, wobei sich der Kontaktbereich entlang des Umfangsbereiches der Druckscheibe erstreckt und wobei der Umfangsbereich unabhängig von der Drehbewegung, also auch im Stillstand des mit der Druckscheibe verbundenen Stirnrades, zumindest abschnittsweise mit Schmiermittel beaufschlagt wird, sodass unabhängig von der Betriebsweise eine ausreichende Schmiermittelversorgung sichergestellt wird.

Somit wird auch beim typischen Metrobetrieb bei einem im Nahverkehr eingesetzten Schienenfahrzeug mit häufigen Start-Stop-Vorgängen sowie mit vielen Stillstandszeiten die Schmiermittelversorgung sichergestellt, unabhängig davon, ob der Druckkamm bzw. die Druckscheibe an dem Antriebsritzel oder an dem Abtriebsrad angeordnet ist.

Gemäß einer vorteilhaften Ausführungsvariante der Erfindung kann vorgesehen sein, dass eine oder auch mehrere Druckscheiben an dem bezüglich des Außenumfanges bzw. -durchmessers kleineren Antriebsritzel drehfest beispielsweise durch Aufschrumpfen oder dergleichen axialseitig befestigt ist. Hierbei wird der Kontaktbereich zwischen der Druckscheibe und dem Abtriebsrad an dem einander zugewandten axialseitigen Umfangsbereich der beiden Bauteile entlang des jeweiligen Verzahnungseingriffes gebildet. Dadurch, dass der Kontaktbereich an einem möglichst radial äußeren Abschnitt des Umfanges gebildet wird, kann eine besonders gute Schmiermittelversorgung dadurch erreicht werden, dass der Umfangsbereich der an dem Antriebsritzel befestigten Druckscheibe zur Schmiermittelversorgung des Koritaktbereiches zumindest abschnittsweise in Schmiermittel eingetaucht ist. Somit ist die Druckscheibe auch im Stillstand zumindest teilweise mit Schmiermittel benetzt. Auf diese Weise wird ein Abriss des Schmiermittelfilms auch nach einem Stillstand sicher verhindert.

Bei der Befestigung der Druckscheibe an dem kleineren Antriebsritzel kann die Schmiermittelversorgung in vorteilhafter Weise durch einen bezogen auf einen im Getriebegehäuse vorgesehenen Bodensumpf höher angeordneten Hochsumpf erfolgen, in dem zumindest der Umfangsbereich des Antriebsritzels zur Schmiermittelversörgung des Kontaktbereiches zumindest abschnittsweise eingetaucht ist. Vom Hochsumpf wird der Kontaktbereich nach einem Stillstand sehr schnell wieder mit Schmiermittel versorgt, sodass der Schmiermittelfilm im Kontaktbereich nicht abreißt oder sehr schnell nach dem Anlauf wieder aufgebaut ist. Der Hochsumpf kann vorzugsweise durch mit der Verzahnung des Abtriebsrades mitgenommenen Schmiermittel versorgt werden. Es ist auch denkbar, den Hochsumpf mit einer anderen Schiermittelversorgung zu verbinden.

Nachfolgend wird die vorliegende Erfindung anhand der Zeichnungen weiter erläutert. Es zeigen:
Figur 1 eine geschnittene Teilansicht einer möglichen Ausführungsvariante einer erfindungsgemäßen Getriebeanordnung eines Schienenfahrzeuges; und
Figur 2 eine geschnittene Ansicht entlang der Schnittlinie A-A gemäß Figur 1

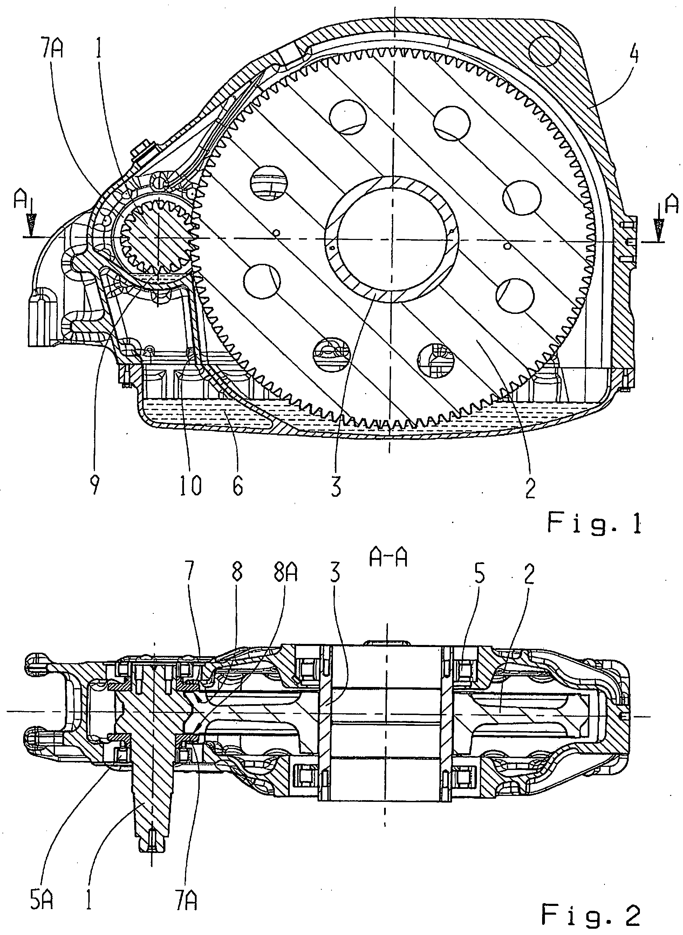

In den Figuren 1 und 2 ist eine mögliche Ausführungsvariante einer Getriebeanordnung eines Schienenfahrzeuges beispielhaft dargestellt. Die Getriebeanordnung kann zum Beispiel als Achsgetriebe eines Schienenfahrzeuges ausgeführt sein.

Aus der Schnittansicht gemäß Figur 1 ist ersichtlich, dass ein mit einer Antriebswelle einteilig ausgebildetes Antriebsritzel 1 mit einem bezüglich des Außendurchmessers größeren Abtriebsrad 2 als schrägverzahntes Stirnrad in Eingriff steht. Das Abtriebsrad 2 ist mit einer als Hohlwelle ausgebildeten Abtriebswelle 3 verbunden. Das Antriebsritzel 1 und das Abtriebsrad 2 sind in dem Getriebegehäuse 4 über Zylinderrollenlager 5, 5A gelagert. Im unteren Teil des Getriebegehäuses 4 ist ein Bodensumpf 6 zur Schmiermittelversorgung des Abtriebsrades 2 vorgesehen, in den die Verzahnung des Abtriebsrades 2 eintaucht.

Bei der beispielhaft dargestellten Ausführungsvariante sind zur Aufnahme bzw. zum Abfangen von an der Schrägverzahnung entstehenden Axialkräften mehrere Drückkämme zum Bilden eines Kontaktbereiches zwischen dem jeweiligen Druckkamm und einem der Stirnräder vorgesehen. Die Druckkämme sind bei der gezeigten Ausführung beispielhaft als zwei Druckscheiben 7, 7A ausgeführt und bevorzugt an dem kleineren Antriebsritzel 1 axial beidseitig drehfest befestigt.

Die Druckscheiben 7, 7A weisen in der in Figur 2 dargestellten Schnittansicht etwa eine L-Form auf, wobei die radiale Länge der Druckscheiben 7, 7A die Verzahnung des Antriebsritzels 1 übersteigt, so dass entlang des Eingriffsbereiches der Verzahnungen des Antriebsritzels 1 und des Abtriebsrades 2 ein Kontaktbereich 8, 8A zwischen der jeweiligen Druckscheibe 7, 7A und dem zugewandten Umfangsbereich des Abtriebsrades 2 gebildet wird. Da die Druckscheiben 7, 7A beidseitig bei dem Antriebsritzel 1 angeordnet sind, können über den jeweils gebildeten Kontaktbereich 8, 8A unabhängig von der Drehrichtung des schrägverzahnten Stirnradpaares die auftretenden Axialkräfte abgefangen werden.

Zur ausreichenden Schmiermittelversorgung kann ein bezogen auf den Bodensumpf 6 höher gelegener Hochsumpf 9 in dem Getriebegehäuse 4 vorgesehen sein, der sich somit über dem Bodensumpf 5 in dem Getriebegehäuse 4 befindet. Der Hochsumpf 9 ist im Wesentlichen an die Form des Umfangsbereiches der Druckscheiben 7, 7A des Antriebsritzels 1 angepasst, sodass sichergestellt ist, dass die an dem Antriebsritzel 1 befestigten Druckscheiben 7, 7A mit ihrem Umfangsbereich zumindest abschnittsweise in das Schmiermittel des Hochsumpfes 9 eingetaucht sind, jedoch ein Kontakt zwischen Druckscheibe 7, 7A und Hochsumpf 9 sicher verhindert wird. Auf diese Weise ist zumindest der Umfangsbereich der Druckscheiben 7, 7A auch im Stillstand des Antriebsritzels 1 mit Schmiermittel benetzt. Demzufolge ist auch bei einem Start-Stop-Betrieb sowie nach längeren Stillstandszeiten eine ausreichende Schmiermittelversorgung der Kontaktbereiche 8, 8A sichergestellt.

Der etwa schalenförmig ausgeführte Hochsumpf 9 weist an der dem Bondensumpf 6 zugewandten Bodenseite zumindest ein Leitelement 10 auf, mit dem Schmiermittel aus dem Bodensumpf 6 in den Hochsumpf 9 durch Drehung des Abtriebsrades 2 über die Verzahnung geführt wird. Damit das mit der Verzahnung mitgeführte Schmiermittel nicht radial weggeschleudert wird, ist das Leitelement 10 an den Außendurchmesser des Abtriebsrades 2 angepasst. Somit ist ein lediglich geringfügiger Abstand zwischen Außendurchmesser des Abtriebsrades 2 und dem Leitelement 10 vorgesehen, sodass ein Kontakt verhindert wird. Auf diese Weise wird das mitgenommene Schmiermittel in den Hochsumpf 9 transportiert.

### Bezugszeichen

- 1: Antriebsritzel
- 2: Abtriebsrad
- 3: Abtriebswelle
- 4: Getriebegehäuse
- 5, 5A: Zylinderrollenlager
- 6: Bodensumpf
- 7, 7A: Druckscheiben
- 8, 8A: Kontaktbereich zwischen Druckscheibe und Abtriebsrad
- 9: Hochsumpf
- 10: Leitelement

## Patentansprüche

1. Getriebeanordnung eines Schienenfahrzeuges mit zumindest einem schrägverzahnten Stirnradpaar, umfassend ein Antriebsritzel (1) und ein Abtriebsrad (2) als kämmende Stirnräder, welche über Zylinderrollenlager (5, 5A) in einem Getriebegehäuse (4) gelagert sind, wobei an wenigstens einem der Stirnräder zumindest ein Druckkamm mit einem zugeordneten Kontaktbereich (8, 8A) zum Abfangen von Axialkräften befestigt ist, **dadurch gekennzeichnet, dass** jeder Druckkamm im Wesentlichen als Druckscheibe (7, 7A) mit am Umfangsbereich der Druckscheibe (7, 7A) zugeordnetem Kontaktbereich (8, 8A) ausgeführt ist, wobei zumindest der Umfangsbereich der Druckscheibe (7, 7A) unabhängig von der Drehbewegung zumindest abschnittsweise mit Schmiermittel beaufschlagt ist.

2. Getriebeanordnung nach Anspruch 1, **dadurch gekennzeichnet, dass** zumindest eine Druckscheibe (7, 7A) an dem bezüglich des Außendurchmessers kleineren Antriebsritzel (1) axialseitig drehfest befestigt ist, wobei der Kontaktbereich (8, 8A) am Umfangsbereich zwischen der Druckscheibe (7, 7A) und dem Abtriebsrad (2) vorgesehen ist.

3. Getriebeanordnung nach Anspruch 1 oder 2, **dadurch gekennzeichnet, dass** ein bezogen auf einen Bodensumpf (6) im Getriebegehäuse (4) höher angeordneter Hochsumpf (9) vorgesehen ist, in den zumindest abschnittsweise wenigstens der Umfangsbereich der Druckscheibe (7, 7A) des Antriebsritzels (1) zur Schmiermittelversorgung eingetaucht ist.

4. Getriebeanordnung nach Anspruch 2 oder 3, **dadurch gekennzeichnet, dass** an dem Antriebsritzel (1) axial beidseitig jeweils eine Druckscheibe (7, 7A) vorgesehen ist.

5. Getriebeanordnung nach Anspruch 3 oder 4, **dadurch gekennzeichnet, dass** der Hochsumpf (9) an die Form des Außendurchmessers jeder zugeordneten Druckscheibe (7, 7A) des Antriebsritzels (1) angepasst ist.

6. Getriebeanordnung nach einem der Ansprüche 3 bis 5, **dadurch gekennzeichnet, dass** der Hochsumpf (9) zumindest ein Leitelement (10) aufweist, mit dem Schmiermittel aus dem Bodensumpf (6) in den Hochsumpf (9) bei Drehung des Abtriebsrades (2) führbar ist.

7. Getriebeanordnung nach Anspruch 6, **dadurch gekennzeichnet, dass** das Leitelement (10) an einem dem Bodensumpf (6) zugewandten Bodenbereich des Hochsumpfs (9) angeformt ist und an den Außendurchmesser des Abtriebsrades (2) angepasst ist.

## Claims

1. Gearbox arrangement of a rail vehicle, having at least one helically toothed spur gear pair comprising a driving pinion (1) and a driven gear (2) as meshing spur gears, which are mounted in a gearbox housing (4) by way of cylindrical roller bearings (5, 5A), wherein, to at least one of the spur gears, there is fastened at least one thrust collar with an associated contact region (8, 8A) for absorbing axial forces, **characterized in that** each thrust collar is formed substantially as a thrust disk (7, 7A) with an associated contact region (8, 8A) on the circumferential region of the thrust disk (7, 7A), wherein at least the circumferential region of the thrust disk (7, 7A) is impinged on at least in sections with lubricant independently of the rotational movement.

2. Gearbox arrangement according to Claim 1, **characterized in that** at least one thrust disk (7, 7A) is fastened rotationally conjointly to the axial side of the driving pinion (1), which is of relatively small outer diameter, wherein the contact region (8, 8A) is provided at the circumferential region between the thrust disk (7, 7A) and the driven gear (2).

3. Gearbox arrangement according to Claim 1 or 2, **characterized in that** a high-level sump (9) is provided which is arranged at a greater height than a base sump (6) in the gearbox housing (4), in which high-level sump at least the circumferential region of the thrust disk (7, 7A) of the driving pinion (1) is immersed at least in sections for the purposes of lubricant supply.

4. Gearbox arrangement according to Claim 2 or 3, **characterized in that** in each case one thrust disk (7, 7A) is provided axially on both sides of the driving pinion (1).

5. Gearbox arrangement according to Claim 3 or 4, **characterized in that** the high-level sump (9) is adapted to the shape of the outer diameter of each associated thrust disk (7, 7A) of the driving pinion (1).

6. Gearbox arrangement according to one of Claims 3 to 5, **characterized in that** the high-level sump (9) has at least one guide element (10) by means of which lubricant can be conducted from the base sump (6) into the high-level sump (9) as the driven gear (2) rotates.

7. Gearbox arrangement according to Claim 6, **characterized in that** the guide element (10) is formed integrally on a base region, facing toward the base sump (6), of the high-level sump (9) and is adapted to the outer diameter of the driven gear (2).

## Revendications

1. Système de transmission d'un véhicule ferroviaire avec au moins une paire de pignons droits à denture oblique, comprenant un pignon d'entraînement (1) et une roue de sortie (2) en tant que pignons droits s'engrenant, qui sont supportés par le biais de paliers à rouleaux cylindriques (5, 5A) dans un boîtier de transmission (4), au moins un peigne de pression avec une région de contact associée (8, 8A) pour recevoir des forces axiales étant fixé au niveau d'au moins l'un des pignons frontaux, **caractérisé en ce que** chaque peigne de pression est réalisé essentiellement sous forme de disque de pression (7, 7A) avec une région de contact (8, 8A) associée à la région périphérique du disque de pression (7, 7A), au moins la région périphérique du disque de pression (7, 7A) étant sollicitée avec du lubrifiant au moins en partie indépendamment du mouvement de rotation.

2. Système de transmission selon la revendication 1, **caractérisé en ce qu'**au moins un disque de pression (7, 7A) est fixé de manière solidaire en rotation du côté axial au niveau du pignon d'entraînement (1) plus petit par rapport au diamètre extérieur, la région de contact (8, 8A) étant prévue au niveau de la région périphérique entre le disque de pression (7, 7A) et la roue de sortie (2).

3. Système de transmission selon la revendication 1 ou 2, **caractérisé en ce qu'**un carter haut (9) disposé plus haut par rapport à un carter de fond (6) est prévu dans le boîtier de transmission (4), dans lequel est plongée au moins en partie au moins la région périphérique du disque de pression (7, 7A) du pignon d'entraînement (1) en vue de l'alimentation en lubrifiant.

4. Système de transmission selon la revendication 2 ou 3, **caractérisé en ce qu'**il est à chaque fois prévu un disque de pression (7, 7A) des deux côtés axialement au niveau du pignon d'entraînement (1).

5. Système de transmission selon la revendication 3 ou 4, **caractérisé en ce que** le carter haut (9) est adapté à la forme du diamètre extérieur de chaque disque de pression associé (7, 7A) du pignon d'entraînement (1).

6. Système de transmission selon l'une quelconque des revendications 3 à 5, **caractérisé en ce que** le carter haut (9) présente au moins un élément de guidage (10) avec lequel du lubrifiant peut être guidé hors du carter de fond (6) dans le carter haut (9) lors de la rotation de la roue de sortie (2).

7. Système de transmission selon la revendication 6, **caractérisé en ce que** l'élément de guidage (10) est formé au niveau d'une région de fond du carter haut (9) tournée vers le carter de fond (6) et est adapté au diamètre extérieur de la roue de sortie (2).
